# EUROPEAN PATENT SPECIFICATION

(11) **EP 2 827 024 B1**
(45) Date of publication and mention of the grant of the patent: **08.06.2016**
(21) Application number: 14168003.3
(22) Date of filing: 13.05.2014
(51) Int. Cl.: F16H 57/031, F16H 57/035, F16H 57/04

(54) **Cooling airflow guide structure of vehicle transmission box**
Kühlluftstromführungsstruktur eines Fahrzeuggetriebes
Structure de guidage d'écoulement d'air de refroidissement de boîte de vitesses d'un véhicule

(30) Priority: 18.07.2013 TW 102125719
(43) Date of publication of application: 21.01.2015
(73) Proprietor: Kwang Yang Motor Co., Ltd., Kaohsiung City 807 (TW)
(72) Inventor: Cheng, Wen-Tso, Cambridge CB1 1AH (GB); Tseng, Hsin-An, Cambridge CB1 1AH (GB)
(74) Representative: Horak, Michael

(56) References cited:
- EP-A1- 2 474 435
- EP-A2- 1 950 457
- EP-A2- 2 020 536

## Description

### (a) Technical Field of the Invention

The present invention generally relates to a cooling airflow guide structure of a vehicle transmission box, and more particularly to a cooling airflow guide structure of a vehicle transmission box that prevents invasion of external moisture into the transmission box to ensure proper operation of a belt transmission mechanism arranged in the transmission box and to thus enhance the operation performance of the belt transmission mechanism of the transmission box.

### (b) Description of the Prior Art

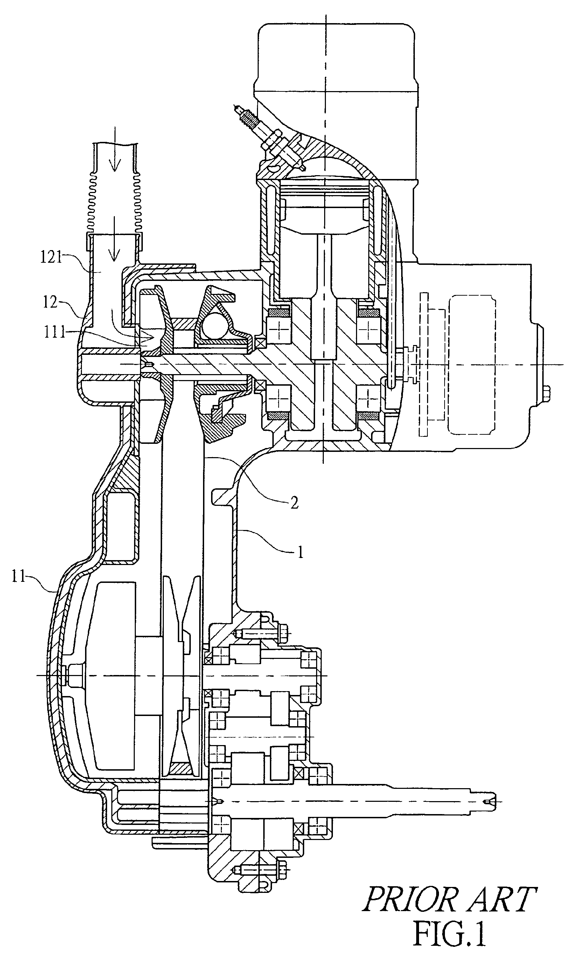

As shown in FIG 1, a transmission box 1 of a vehicle power unit is provided therein with belt transmission mechanism 2. The belt transmission mechanism 2 operates at a high speed inside the transmission box 1 so as to move the vehicle forward.

Referring to FIG 1, to prevent the high temperature induced by the high speed operation of belt transmission mechanism 2 inside the transmission box 1 from damaging the belt transmission mechanism 2, some manufacturers provides an airflow guide hood 12 to be set outside the cover 11 of the transmission box 1. The airflow guide hood 12 has a front end in which an airflow guide opening 121 is formed for the external cold air whereby the external cold air is introduced through the airflow guide opening 121 of the airflow guide hood 12 in to a cooling air inlet opening 111 of the cover 11 of the transmission box 1. As such, the external cold air is guided into the transmission box 1 for cooling of the belt transmission mechanism 2. After cooling of the transmission box 1, the cold air is discharged through an exit opening (not shown in the drawings) formed in a rear end of the transmission box 1 so as to ensure normal operation of the belt transmission mechanism 2.

However, although the above described convention cooling structure of the transmission box 1 is effective in cooling the transmission box 1, when the vehicle moves in rains or passes through a water accumulation area, since the airflow guide opening 121 of the airflow guide hood 12 is arranged at the front end of the airflow guide hood 12, with the external cold air being introduced into the transmission box 1, external moisture entrains the cold air to move with the cold air to get into the transmission box 1. After the external moisture moves with the cold air into the transmission box 1, the external moisture may cause severe slipping of the belt transmission mechanism 2. In other words, the moisture may make the belt transmission mechanism 2 losing the capability of transmission of power so that the vehicle cannot operate normally to move forward.

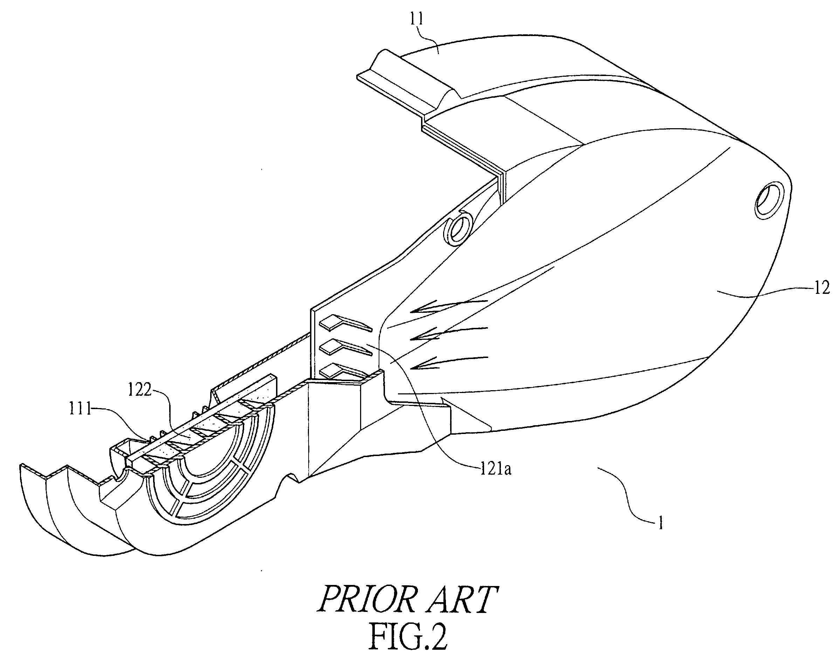

As shown in FIGS. 1 and 2, to improve the above described conventional cooling structure of the transmission box 1, some manufacturers developed an arrangement where the airflow guide opening 121a of the airflow guide hood 12 is formed in a middle section of the airflow guide hood 12 and a labyrinth mechanism 122 is formed on the airflow guide hood 12 at a location corresponding to a cooling air inlet opening 111 of the cover 11 of the transmission box 1. As such, the external cold air, when entering the airflow guide opening 121 a, is guided by a negative pressure induced by the high speed operation of the belt transmission mechanism 2 to move, under the condition of being hindered by the labyrinth mechanism 122, through the cooling air inlet opening 111 of the cover 11 into the transmission box 1 to carry out a cooling operation.

The above-described another convention cooling airflow guide structure of the transmission box 1 arranges the airflow guide opening 121a in the middle section of the airflow guide hood 12 in order to reduce the amount of external moisture that directly enters the transmission box 1 and also uses the labyrinth mechanism 122 to block a portion of the external moisture that entrains the cold air from being drawn into the transmission box 1. Said another conventional cooling airflow structure of the transmission box 1 shown in FIG 2 can effectively reduce the amount of external moisture entering the transmission box 1, but the airflow guide hood 12 comprises a labyrinth mechanism 122 at a location corresponding to the cooling air inlet opening 111 of the cover 11 of the transmission box 1 the cover 11 and, besides preventing the external moisture from entering the transmission box 1, the labyrinth mechanism 122 also hinders the amount of the external cold air from entering the transmission box 1. More specifically, the external cold air will be caused by the labyrinth mechanism 122 to form turbulences that pose a great resistance so as to limit the amount of external cold air that enters the transmission box 1 thereby making it not possible to reach the purpose of sufficiently cooling the belt transmission mechanism 2.

Thus, it is a challenge of the industry to provide a solution that effectively prevents external moisture from entering the transmission box 1, while supplying an enhanced amount of cooling air to the transmission box 1.

EP 2 020 536 A2 (the prior art document D1) discloses a cooling structure for belt type non-stage transmission wherein the power unit can be prevented from being enlarged in size due to a side cover for taking in a cooling airflow, and the power unit can be configured with an excellent appearance. However, when the vehicle equipped with the cooling structure of EP 2 020 536 A2 moves in rain or passes through a water accumulation area, external moisture moves with the cold air into the transmission box thereby causing severe slipping of the belt transmission mechanism and therefore making the vehicle difficult to operate normally to move forward.

### SUMMARY OF THE INVENTION

The primary object of the present invention is to provide a cooling airflow guide structure of a vehicle transmission box, wherein the transmission box comprises a box body and a cover, the transmission box comprising a belt transmission mechanism, the belt transmission mechanism comprising a driving disk assembly and a driven disk assembly, a driving belt being arranged to couple between the driving disk assembly and the driven disk assembly; the cover of the transmission box comprises a cooling air inlet opening formed therein, an airflow guide hood being set outside and covering the cover, the airflow guide hood comprising at least an airflow guide opening formed therein, the airflow guide opening extending through the airflow guide hood, the airflow guide hood has an inside surface that comprises a flow guide member raised therefrom and adjacent to the airflow guide opening, characterized in that the inside surface of the airflow guide hood comprising a blocking rib formed thereon and above the airflow guide opening, the flow guide member and the blocking rib defining a flow guide opening on the inside surface of the airflow guide hood and communicating with the airflow guide opening, and in that a flow escort rib having a lower portion in which a water drain passage is formed.

The object of the present invention is to provide a cooling airflow guide structure of a vehicle transmission box, which overcomes the drawback that the conventional cooling airflow guide structure of the vehicle transmission box cannot effectively prevent the external moisture from entering the transmission box and thus make the belt transmission mechanism arranged inside the transmission box invaded by the moisture to result in slipping.

To achieve the above object, the technical solution adopted in the present invention is to provide a cooling airflow guide structure of a vehicle transmission box, wherein the transmission box comprises a box body and a cover. The transmission box comprises a belt transmission mechanism. The belt transmission mechanism comprises a driving disk assembly and a driven disk assembly. A driving belt is arranged to couple between the driving disk assembly and the driven disk assembly. The cover of the transmission box comprises a cooling air inlet opening formed therein. An airflow guide hood is set outside and covers the cover. The airflow guide hood comprises at least an airflow guide opening formed therein. The airflow guide opening extends through the airflow guide hood. The airflow guide hood has an inside surface that comprises a flow guide member raised therefrom and adjacent to the airflow guide opening. The inside surface of the airflow guide hood comprises a blocking rib formed thereon and above the airflow guide opening. The flow guide member and the blocking rib defining a flow guide opening on the inside surface of the airflow guide hood and communicating with the airflow guide opening. The inside surface of the airflow guide hood comprises a flow escort rib formed thereon to be opposite to the flow guide opening. The flow escort rib has a lower portion in which a water drain passage is formed.

The efficacy achieved with the above described technical of the present invention is that with the arrangement that the flow guide member, the flow guide opening, and the flow escort rib of the inside surface of the airflow guide hood define an the air ingress channel and the air ingress channel communicates with the airflow guide opening, cold air entering the transmission box moves along the flow escort rib under a centrifugal condition so that the moisture entraining the cold air is caused to attach to the flow escort rib. When accumulation of water on the flow escort rib reaches a threshold quantity, the moisture condenses and becomes water droplets that fall down to drain out of the airflow guide hood through the water drain passage formed in the lower portion of the flow escort rib. In this way, the amount of moisture that enters the transmission box can be reduced to thereby ensure normal operation of the belt transmission mechanism arranged in the transmission box.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view showing a conventional cooling airflow guide structure of a vehicle transmission box.
FIG 2 is another schematic view showing a conventional cooling airflow guide structure of a vehicle transmission box.
FIG 3 is a cross-sectional view showing a portion of a vehicle transmission box according to the present invention.
FIG 4 is an exploded view showing a cooling airflow guide structure of a vehicle transmission box according to the present invention.
FIG 5 is a view showing an inside surface of an airflow guide hood according to the present invention.
FIG 6 is a front view showing the airflow guide hood of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

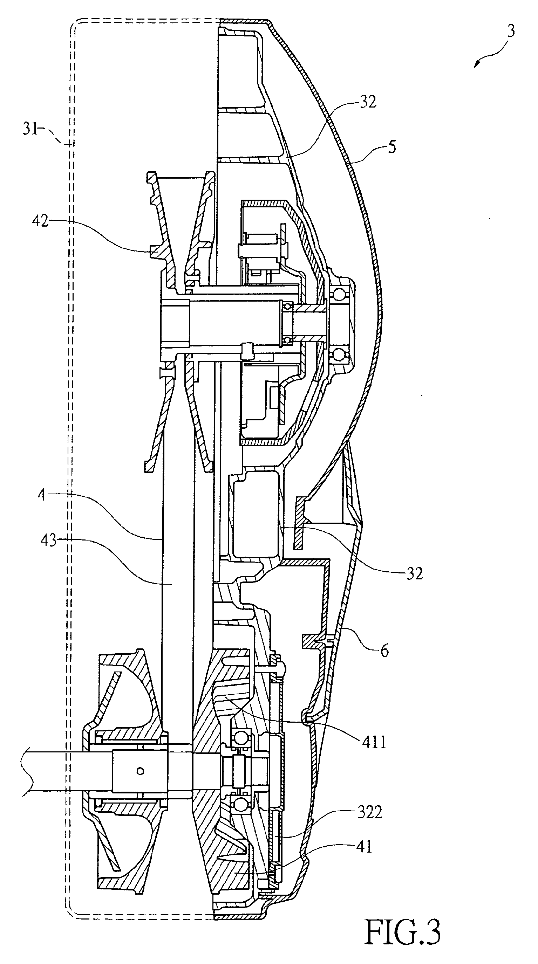

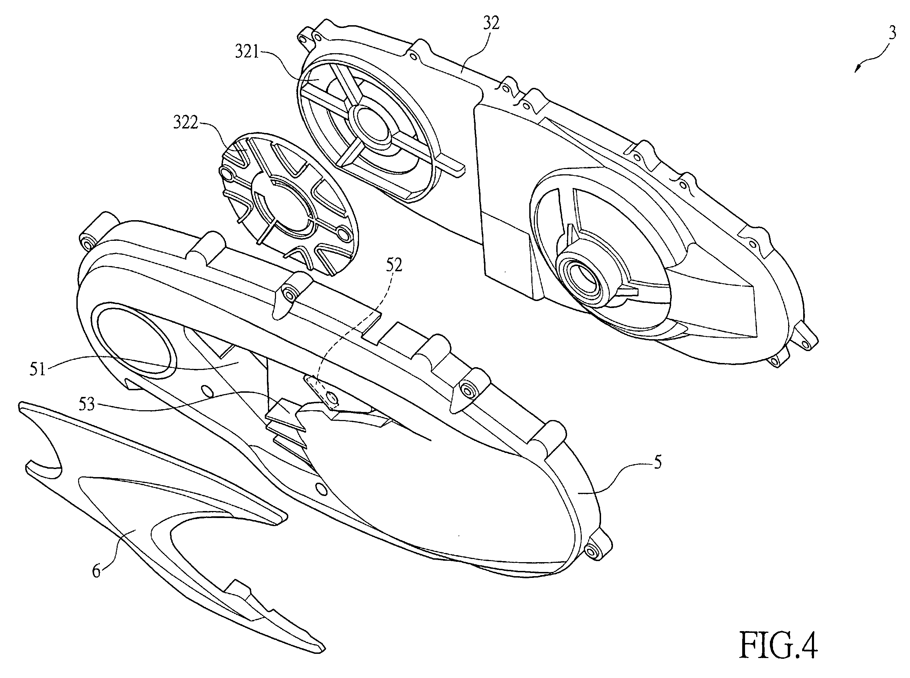

Firstly, referring to FIGS. 3 and 4, a transmission box 3 according to the present invention comprises a box body 31 and a cover 32. The transmission box 3 defines a receiving space delimited by the box body 31 and the cover 32 so that the transmission box 3 receives and fixes therein a belt transmission mechanism 4. The belt transmission mechanism 4 comprises a driving disk assembly 41 and a driven disk assembly 42, wherein a V-shaped driving belt 43 is arranged to couple between the driving disk assembly 41 and the driven disk assembly 42. The driving disk assembly 41 of the belt transmission mechanism 4 is driven by a crankshaft of an engine (not shown in the drawings) to move. The driving disk assembly 41 comprises a centrifugal fan 411 adjacent to the cover 32. The cover 32 comprises a cooling air inlet opening 321 formed thereon to correspond to the centrifugal fan 411. Also, the cover 32 comprises a filtering member 322 arranged outside and covering the cooling air inlet opening 321. An airflow guide hood 5 is arranged outside of and covers the cover 32.

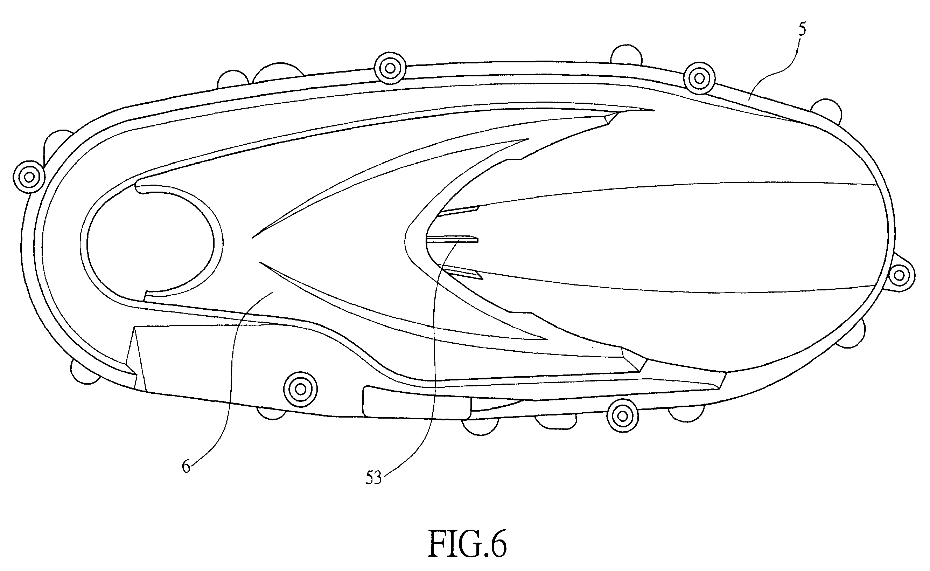

Referring to FIGS. 3, 4, 5, and 6, the airflow guide hood 5 comprises a primary airflow guide opening 51 and a secondary airflow guide opening 52 formed therein at locations around a middle section thereof. The primary airflow guide opening 51 and the secondary airflow guide opening 52 extend completely through the airflow guide hood 5. The airflow guide hood 5 comprises a plurality of guide ribs 53 extending from a perimeter of the primary airflow guide opening in a direction toward the rear end (the rear side of the vehicle). Further, the airflow guide hood 5 has an outside surface covered by a hood cover 6. The hood cover 6 shields the primary airflow guide opening 51 and the secondary airflow guide opening 52. More specifically, when viewed from a front side of the vehicle, the primary airflow guide opening 51 and the secondary airflow guide opening 52 are covered and shielded by the hood cover 6. The guide ribs 53 are located rearward of the hood cover 6 in such a way that front ends of the guide ribs 53 are partly covered by the hood cover 6, as shown in FIG 6.

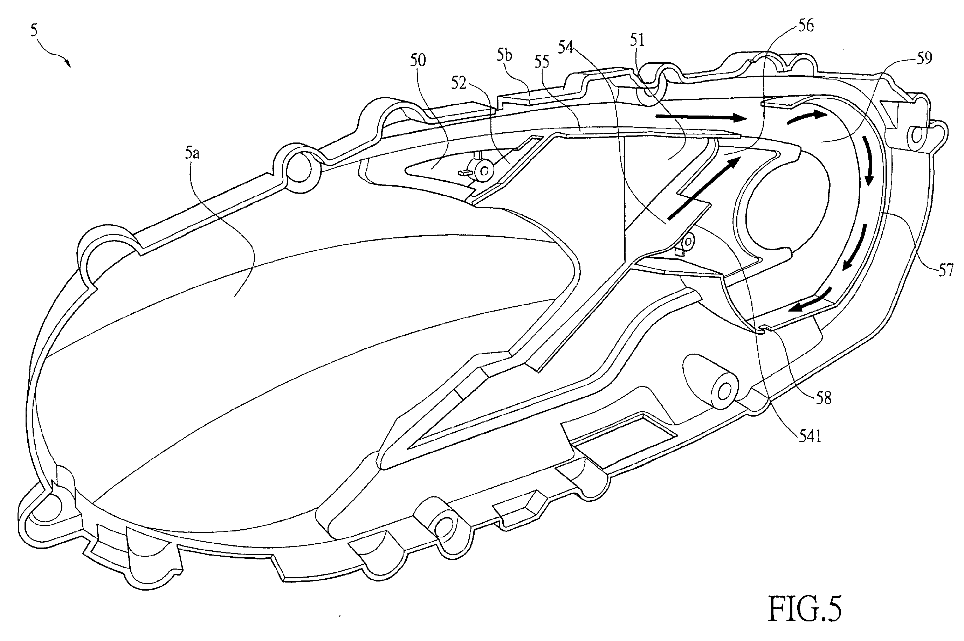

Referring to FIGS. 3 and 5, the airflow guide hood 5 has an inside surface 5a (namely the surface facing the cover 32 of the transmission box 3), which comprises an inclined flow guide member 54 under the primary airflow guide opening 51. The flow guide member 54 is inclined from a right upper end to a left lower end (where the right-hand side of the drawings sheet is the right side, while the left-hand side of the drawing sheet is the left side). Further, the inside surface 5a of the airflow guide hood 5 comprises a blocking rib 55 formed thereon above the primary airflow guide opening 51. The flow guide member 54 and the blocking rib 55 are arranged on the inside surface 5a of the airflow guide hood 5 in such a way as to define an acute included angle therebetween, whereby an upper side 541 of the flow guide member 54 and the blocking rib 55 define a flow guide opening 56 that is in communication with the primary airflow guide opening 51. A flow escort rib 57 that is in the form of a loop is raised from the inside surface 5a of the airflow guide hood 5 at the front end portion thereof The flow escort rib 57 extends along the front end of the airflow guide hood 5 to form an arc. More specifically, the flow escort rib 57 is arranged as an arc that surrounds the cooling air inlet opening 321 and the flow escort rib 57 is also arranged to be opposite to the flow guide opening 56. The flow escort rib 57 has a lower portion in which a notch like water drain passage 58 is formed. The flow guide member 54, the flow guide opening 56, and the flow escort rib 57 define a primary air ingress channel 59, and the primary air ingress channel 59 is in communication with the primary airflow guide opening 51. As shown in FIG 3, the flow escort rib 57 opposes the cooling air inlet opening 321 of the cover 32 of the transmission box 3 and more specifically, the flow escort rib 57 is located outside the cooling air inlet opening 321 of the cover 32 of the transmission box 3. Also referring to FIGS. 5, the blocking rib 55 of the inside surface 5a of the airflow guide hood 5 and a circumferential wall 5b of the airflow guide hood 5 collectively define a secondary air ingress channel 50. The secondary air ingress channel 50 has an end communicating with the secondary airflow guide opening 52 and an opposite end communicating with the primary air ingress channel 59.

Referring to FIGS. 3 and 5, to performing guide of a cooling airflow in a vehicle transmission box 3, the belt transmission mechanism 4 that is arranged in the transmission box 3 is driven by the crankshaft of the engine (not shown in the drawings) to operate at a high speed. Due to the high speed operation of the belt transmission mechanism 4 within the transmission box 3, a low pressure (negative pressure) is induced in the transmission box 3 so as to create a negative pressure induced suction force at the cooling air inlet opening 321 of the cover 32 of the transmission box 3. Such a negative pressure induced suction force draws in the surrounding cold air through the primary airflow guide opening 51 and the secondary airflow guide opening 52 of the airflow guide hood 5 that is set on the cover 32 of the transmission box 3. The cold air of the surroundings is so drawn into the airflow guide hood 5 that the cold air passing through the primary airflow guide opening 51 is guided by the flow guide member 54 to flow through the flow guide opening 56 in an upward direction and also toward the flow escort rib 57. In other words, the cold air passing through the primary airflow guide opening 51 enters the primary air ingress channel 59 defined by the flow guide member 54, the flow guide opening 56, and the flow escort rib 57 and is driven by the centrifugal fan 411 of the belt transmission mechanism 4 to pass through the filtering member 322 to have sand and mud entraining the cold air removed thereby and then passes through the cooling air inlet opening of the transmission box 3 to enter the transmission box 3 to carry out cooling of the belt transmission mechanism 4.

Then, cooling air that passes through the secondary airflow guide opening 52 to enter the airflow guide hood 5 is guided by the blocking rib 55 into the secondary air ingress channel 50 and the moves through the secondary air ingress channel 50 into the primary air ingress channel 59.

Referring to FIGS. 3 and 5, the present invention is made such that when a vehicle moves in rains or passes through a water accumulation area, the external cold air often carries a large amount of moisture. When the external cold air is drawn into the airflow guide hood 5, the external cold air is mixed with a large amount of moisture. A portion of the cold air enters the primary airflow guide opening 51 and is guided by the flow guide member 54 into the primary air ingress channel 59, while a minor portion of the cold air that passes through the secondary airflow guide opening 52 into the airflow guide hood 5 enters the secondary air ingress channel 50 and is guided by the negative pressure induced by the belt transmission mechanism 4 to flow into the primary air ingress channel 59 so as to drive forward the cold air that enters through the primary airflow guide opening 51, whereby the cold air moves along the flow escort rib 57 under a centrifugal process that the moisture that entrains the cold air is caused to attach to the flow escort rib 57. When accumulation of water on the flow escort rib 57 reaches a threshold quantity, the moisture condenses and becomes water droplets that fall down to drain out of the airflow guide hood 5 through the water drain passage 58 formed in the lower portion of the flow escort rib 57. In this way, the amount of moisture that enters the transmission box 3 can be reduced to thereby ensure normal operation of the belt transmission mechanism 4 arranged in the transmission box 3.

The efficacy of the present invention is that a primary airflow guide opening 51 and a secondary airflow guide opening 52 formed in an airflow guide hood 5 around a middle section thereof; an inside surface 5a of the airflow guide hood 5 comprises a flow guide member 54, a flow guide opening 56, and a flow escort rib 57 that form a primary air ingress channel 59 in such a way that the primary air ingress channel 59 is in communication with the primary airflow guide opening 51; and a blocking rib 55 of the inside surface 5a of the airflow guide hood 5 and a circumferential wall 5b of the airflow guide hood 5 define a secondary air ingress channel 50 in such a way that the air ingress channel 50 has an end communicating with the secondary airflow guide opening 52 and an opposite end communicating with the primary air ingress channel 59, whereby when external cold air that contains a large amount of moisture is drawn into the airflow guide hood 5, a portion of the cold air that passes through the primary airflow guide opening 51 is guided by the flow guide member 54 into the primary air ingress channel 59, while a minor portion of the cold air that passes through the secondary airflow guide opening 52 into the airflow guide hood 5 enters the secondary air ingress channel 50 and is guided by a negative pressure induced by a belt transmission mechanism 4 to flow into the primary air ingress channel 59, so as to drive forward the cold air that enters through the primary airflow guide opening 51, whereby the cold air moves along the flow escort rib 57 under a centrifugal condition that the moisture that entrains the cold air is caused to attach to the flow escort rib 57. When accumulation of water on the flow escort rib 57 reaches a threshold quantity, the moisture condenses and becomes water droplets that fall down to drain out of the airflow guide hood 5 through the water drain passage 58 formed in the lower portion of the flow escort rib 57. In this way, the amount of moisture that enters the transmission box 3 can be reduced to thereby ensure normal operation of the belt transmission mechanism 4 arranged in the transmission box 3.

It will be understood that each of the elements described above, or two or more together may also find a useful application in other types of methods differing from the type described above.

## Claims

1. A cooling airflow guide structure of a vehicle transmission box, wherein the transmission box (3) comprises a box body (31) and a cover (32), the transmission box (3) comprising a belt transmission mechanism (4), the belt transmission mechanism (4) comprising a driving disk assembly (41) and a driven disk assembly (42), a driving belt (43) being arranged to couple between the driving disk assembly (41) and the driven disk assembly (42); the cover (32) of the transmission box (3) comprises a cooling air inlet opening (321) formed therein, an airflow guide hood (5) being set outside and covering the cover (3), the airflow guide hood (5) comprising at least an airflow guide opening (51, 52) formed therein, the airflow guide opening (51, 52) extending through the airflow guide hood (5), the airflow guide hood (5) has an inside surface (5a) that comprises a flow guide member (54) raised therefrom and adjacent to the airflow guide opening (51, 52), **characterized in that** the inside surface (5a) of the airflow guide hood (5) comprising a blocking rib (55) formed thereon and above the airflow guide opening (51), the flow guide member (54) and the blocking rib (55) defining a flow guide opening (56) on the inside surface (5a) of the airflow guide hood (5) and communicating with the airflow guide opening (51), and **in that** a flow escort rib (57) having a lower portion in which a water drain passage (58) is formed.

2. The cooling airflow guide structure of the vehicle transmission box according to claim 1, wherein the driving disk assembly (41) comprises a centrifugal fan (411) adjacent to the cover (32), the cover (32) comprising a cooling air inlet opening (321) formed thereon to correspond to the centrifugal fan (411), the cover (32) comprising a filtering member (322) arranged outside and covering the cooling air inlet opening (321).

3. The cooling airflow guide structure of the vehicle transmission box according to claim 1, wherein the flow guide member (54) is formed on the airflow guide hood in an inclined manner.

4. The cooling airflow guide structure of the vehicle transmission box according to claim 1 or 3, wherein the flow guide member (54) and the blocking rib (55) are arranged on the airflow guide hood (5) in such a way as to define an acute included angle therebetween.

5. The cooling airflow guide structure of the vehicle transmission box according to claim 1, wherein the flow escort rib (57) is arranged as an arc that surrounding the cooling air inlet opening (321).

6. The cooling airflow guide structure of the vehicle transmission box according to claim 1, wherein the airflow guide hood (5) comprise a primary airflow guide opening (51) and a secondary airflow guide opening (52) around a middle section thereof, the flow guide member (54) the flow guide opening (56), and the flow escort rib (57) of the airflow guide hood (5) define a primary air ingress channel (59), the primary air ingress channel (59) being in communication with the primary airflow guide opening (51).

7. The cooling airflow guide structure of the vehicle transmission box according to claim 1 or 6, wherein the airflow guide hood (5) comprise a primary airflow guide opening (51) and a secondary airflow guide opening (52) around a middle section thereof, the flow guide member (54) the flow guide opening (56), and the flow escort rib (57) of the airflow guide hood (5) define a primary air ingress channel (59), the airflow guide hood (5) comprising the blocking rib (55), the blocking rib (55) and a circumferential wall (5b) the airflow guide hood (5) a secondary air ingress channel (50), the secondary air ingress channel (50) having an end communicating with the secondary airflow guide opening (52) and an opposite end communicating with the primary air ingress channel (59).

8. The cooling airflow guide structure of the vehicle transmission box according to claim 7, wherein the airflow guide hood (5) comprises a plurality of guide ribs (53) extending from a perimeter of the primary airflow guide opening (51) in a direction toward a rear end, the airflow guide hood (5) having an outside surface covered by a hood cover (6).

9. The cooling airflow guide structure of the vehicle transmission box according to claim 8, wherein the guide ribs (53) are located rearward of the hood cover (6) in such a way that front ends of the guide ribs (53) are partly covered by the hood cover (6).

## Patentansprüche

1. Kühlungsluftstromführungsstruktur eines Fahrzeuggetriebekastens,
wobei der Getriebekasten (3) einen Kastenkörper (31) und einen Deckel (32) umfasst, wobei der Getriebekasten (3) einen Riemenübertragungsmechanismus (4) umfasst und der Riemenübertragungsmechanismus (4) eine Antriebsscheibenanordnung (41) und eine Abtriebsscheibenanordnung (42) umfasst, wobei ein Treibriemen (43) angeordnet ist, um zwischen der Antriebsscheibenanordnung (41) und der Abtriebsscheibenanordnung (42) zu koppeln; wobei der Deckel (32) des Getriebekasten (3) eine Kühllufteinlassöffnung (321) umfasst, die darin gebildet ist, wobei eine Luftleithaube (5) sich außerhalb befinden und den Deckel (3) bedeckt, wobei die Luftleithaube (5) mindestens eine Luftleitöffnung (51, 52) umfasst, die darin gebildet ist, wobei die Luftleitöffnung (51, 52) durch die Luftleithaube (5) verläuft, wobei die Luftleithaube (5) eine Innenfläche (5a) aufweist, von der sich ein Strömungsleitkörper (54) abhebt, angrenzend an die Luftleitöffnung (51, 52), **gekennzeichnet dadurch, dass** die Innenfläche (5a) der Luftleithaube (5) eine Sperrrippe (55) umfasst, die darauf und oberhalb der Luftleitöffnung (51) gebildet ist, wobei der Strömungsleitkörper (54) und die Sperrrippe (55) eine Strömungsführimgsöffnung (56) auf der Innenfläche (5a) der Luftleithaube (5) definieren, die mit der Luftleitöffnung (51) verbunden ist, sowie dadurch, dass ein Strömungsbegleitrippe (57) einen niedrigen Teil umfasst, in dem ein Wasserablaufkanal (58) gebildet ist.

2. Kühlungsluftstromflihrungsstruktur für den Fahrzeuggetriebekasten nach Anspruch 1, wobei die Antriebsscheibenanordnung (41) einen Zentrifugallüfter (411) angrenzend an den Deckel (32) umfasst, wobei der Deckel (32) eine Kühllufteinlassöffhung (321) umfasst, die darauf gebildet ist, um dem Zentrifügallüfter (411) zu entsprechen, wobei der Deckel (32) ein Filterelement (322) umfasst, das außerhalb angeordnet ist und die Kühllufteinlassöffnung (321) bedeckt.

3. Kühlungsluftstromführungsstruktur für den Fahrzeuggetriebekasten nach Anspruch 1, wobei der Strömungsleitkörper (54) auf der Luftleithaube geneigt ausgebildet ist.

4. Kühlungsluftstromführungsstruktur für den Fahrzeuggetriebekasten nach Anspruch 1 oder 3, wobei der Strömungsleitkörper (54) und die Sperrrippe (55) auf der Luftleithaube (5) derart angeordnet sind, um einen spitzen Winkel dazwischen zu definieren.

5. Kühlungsluftstromführungsstruktur für den Fahrzeuggetriebekasten nach Anspruch 1, wobei die Strömungsbegleitrippe (57) als Bogen angebracht ist, der die Kühllufteinlassöffnung (321) umgibt.

6. Kühlungsluftstromführungsstruktur für den Fahrzeuggetriebekasten nach Anspruch 1, wobei die Luftleithaube (5) eine primäre Luftleitöffnung (51) und eine sekundäre Luftleitöffnung (52) um einen mittleren Abschnitt davon herum umfasst, wobei der Strömungsleitkörper (54), die Strömungsführingsöffiung (56) und die Strömungsbegleitrippe (57) der Luftleithaube (5) einen Primärlufteintrittskanal (59) definieren, wobei der Primärlufteintrittskanal (59) in Verbindung mit der Primärluftleitöffnung (51) steht.

7. Kühlungsluftstromführungsstruktur für den Fahrzeuggetriebekasten nach Anspruch 1 oder 6, wobei die Luftleithaube (5) eine primäre Luftleitöffnung (51) und eine sekundäre Luftleitöffnung (52) um einen mittleren Abschnitt davon herum umfasst, wobei der Strömungsleitkörper (54), die Strömungsführungsöffnung (56) und die Strömungsbegleitrippe (57) der Luftleithaube (5) einen Primärlufteintrittskanal (59) definieren, wobei die Luftleithaube (5) die Sperrrippe (55) umfasst, wobei die Sperrrippe (55) und eine Umfangswand (5b) der Luftleithaube (5) einen Sekundärlufteintrittskanal (50) definieren, wobei der Sekundärlufteintrittskanal (50) ein Ende aufweist, das mit der sekundären Luftleitöffnung (52) verbunden ist, und ein gegenüberliegendes Ende, das mit dem Primärlufteintrittskanal (59) verbunden ist.

8. Kühlungsluftstromführungsstruktur für den Fahrzeuggetriebekasten nach Anspruch 7, wobei die Luftleithaube (5) eine Vielzahl von Führungsrippen (53) umfasst, die von einem Umfang der Primärluftleitöffnung (51) hin zu einem Hinterende verlaufen, wobei die Luftleithaube (5) eine Außenfläche aufweist, die von einem Haubendeckel (6) bedeckt wird.

9. Kühlungsluftstromführungsstruktur für den Fahrzeuggetriebekasten nach Anspruch 8, wobei die Führungsrippen (53) sich hinter dem Haubendeckel (6) befinden, so dass die Vorderenden der Führungsrippen (53) teilweise von dem Haubendeckel (6) bedeckt sind.

## Revendications

1. Structure de guidage du flux d'air de refroidissement d'une boîte de transmission d'un véhicule, où la boîte de transmission (3) comprend un corps de boîte (31) et un couvercle (32), la boîte de transmission (3) comprenant un mécanisme de transmission par courroie (4), le mécanisme de transmission par courroie (4) comprenant un ensemble de disques d'entraînement (41) et un ensemble de disques entraînés (42), une courroie d'entraînement (43) étant disposée pour le couplage entre l'ensemble de disques d'entraînement (41) et l'ensemble de disques entraînés (42); le couvercle (32) de la boîte de transmission (3) comprend une ouverture d'entrée d'air de refroidissement (321) formée dedans, un capot de guidage du flux d'air (5) étant positionné à l'extérieur et couvrant le couvercle (3), le capot de guidage du flux d'air (5) comprenant au moins une ouverture de guidage du flux d'air (51, 52) formée dedans, l'ouverture de guidage du flux d'air (51, 52) s'étendant à travers le capot de guidage du flux d'air (5), le capot de guidage du flux d'air (5) a une surface intérieure (5a) qui comprend un élément de guidage du flux (54) soulevé de cette dernière et adjacent à l'ouverture de guidage du flux d'air (51, 52), **caractérisée en ce que** la surface intérieure (5a) du capot de guidage du flux d'air (5) comprend une nervure de blocage (55) formée là-dessus et au-dessus de l'ouverture de guidage du flux d'air (51), l'élément de guidage du flux (54) et la nervure de blocage (55) définissant une ouverture de guidage du flux (56) sur la surface intérieure (5a) du capot de guidage du flux d'air (5) et communiquant avec l'ouverture de guidage du flux d'air (51), et **en ce qu'**une nervure d'accompagnement du flux (57) a une partie inférieure où un passage d'écoulement d'eau (58) est formé.

2. Structure de guidage du flux d'air de refroidissement de la boîte de transmission d'un véhicule selon la revendication 1, où l'ensemble de disques d'entraînement (41) comprend un ventilateur centrifuge (411) adjacent au couvercle (32), le couvercle (32) comprenant une ouverture d'entrée d'air de refroidissement (321) formée là-dessus pour correspondre au ventilateur centrifuge (411), le couvercle (32) comprenant un élément de filtrage (322) disposé à l'extérieur et couvrant l'ouverture d'entrée d'air de refroidissement (321).

3. Structure de guidage du flux d'air de refroidissement de la boîte de transmission d'un véhicule selon la revendication 1, où l'élément de guidage du flux (54) est formé sur le capot de guidage du flux d'air de manière inclinée.

4. Structure de guidage du flux d'air de refroidissement de la boîte de transmission d'un véhicule selon la revendication 1 ou 3, où l'élément de guidage du flux (54) et la nervure de blocage (55) sont disposés sur le capot de guidage du flux d'air (5) de façon à définir un angle aigu entre eux.

5. Structure de guidage du flux d'air de refroidissement de la boîte de transmission d'un véhicule selon la revendication 1, où la nervure d'accompagnement du flux (57) est disposée comme un arc qui entoure l'ouverture d'entrée d'air de refroidissement (321).

6. Structure de guidage du flux d'air de refroidissement de la boîte de transmission d'un véhicule selon la revendication 1, où le capot de guidage du flux d'air (5) comprend une ouverture de guidage du flux d'air primaire (51) et une ouverture de guidage du flux d'air secondaire (52) autour d'une section centrale de cela, l'élément de guidage du flux (54), l'ouverture de guidage du flux (56) et la nervure d'accompagnement du flux (57) du capot de guidage du flux d'air (5) définissent un canal d'introduction d'air primaire (59), le canal d'introduction d'air primaire (59) étant en communication avec l'ouverture de guidage du flux d'air primaire (51).

7. Structure de guidage du flux d'air de refroidissement de la boîte de transmission d'un véhicule selon la revendication 1 ou 6, où le capot de guidage du flux d'air (5) comprend une ouverture de guidage du flux d'air primaire (51) et une ouverture de guidage du flux d'air secondaire (52) autour d'une section centrale de cela, l'élément de guidage du flux (54), l'ouverture de guidage du flux (56) et la nervure d'accompagnement du flux (57) du capot de guidage du flux d'air (5) définissent un canal d'introduction d'air primaire (59), le capot de guidage du flux d'air (5) comprenant la nervure de blocage (55), la nervure de blocage (55) et une paroi circonférentielle (5b) du capot de guidage du flux d'air (5) définissent un canal d'introduction d'air secondaire (50), le canal d'introduction d'air secondaire (50) ayant une extrémité communiquant avec l'ouverture de guidage du flux d'air secondaire (52) et une extrémité opposée communiquant avec le canal d'introduction d'air primaire (59).

8. Structure de guidage du flux d'air de refroidissement de la boîte de transmission d'un véhicule selon la revendication 7, où le capot de guidage du flux d'air (5) comprend une pluralité de nervures de guidage (53), s'étendant d'un périmètre de l'ouverture de guidage du flux d'air primaire (51) dans une direction vers une extrémité arrière, le capot de guidage du flux d'air (5) ayant une surface extérieure couverte par un couvercle de capot (6).

9. Structure de guidage du flux d'air de refroidissement de la boîte de transmission d'un véhicule selon la revendication 8, où les nervures de guidage (53) sont situées à l'arrière du couvercle de capot (6) de façon à ce que les extrémités antérieures des nervures de guidage (53) soient partiellement couvertes par le couvercle de capot (6).
